# EUROPEAN PATENT APPLICATION

(11) **EP 3 451 678 A1**
(43) Date of publication of application: **06.03.2019**
(21) Application number: 18191318.7
(22) Date of filing: 28.08.2018
(51) Int. Cl.: H04N 21/436, H04N 21/61, H04N 21/63

(54) **SYSTEM AND METHOD FOR DELIVERING DIGITAL CONTENT**

(30) Priority: 29.08.2017 US 201762551304 P; 02.11.2017 US 201762580486 P
(71) Applicant: Velocity, The Greatest Phone Company Ever, Inc., Holland OH 43528 (US)
(72) Inventor: Kiley, Greg, Miami, Florida 33143 (US); Lehmann, Brandon, Fremont, Ohio 43420 (US)
(74) Representative: Games, Robert Harland

(57) **Abstract**

A system and method for selectively delivering digital content from a mobile device, such as a cell phone, to a display device, such as a Chromecast enabled television in a hotel room. The method includes broadcasting advertisement signals from a plurality of the display devices in different rooms over a first network indicating that the display devices are available to receive digital content. A controller generates a database of the room location of the display devices. Commands are sent from the mobile device to display digital content on the display device over a second network. The controller receives the commands on the second network and identifies the registered room number of the mobile device. The display commands are sent from the controller to the display device on the first network based on the room location of the display device and the room location of the mobile device.

## Description

### CROSS-REFERENCE TO RELATED APPLICATIONS

This application claims the benefit of the filing date of US Provisional Patent Application Serial No. 62/551,304, titled System and Method for Delivering Digital Content, filed August 29, 2017, and US Provisional Patent Application Serial No. 62/580,486, titled Improved System and Method of Delivering Digital Content, filed November 2, 2017.

### BACKGROUND

### Field

The present disclosure relates generally to a system and method for delivering digital content to a display device and, more particularly, to a system and method for selectively casting audio-visual digital content from a user's mobile device to only a Chromecast display device in a hotel room registered to the user, where the hotel has many Chromecast display devices in its rooms operating on the same network.

### Discussion of the Related Art

Chromecast™ is a digital media device that connects to an HDMI port of a high definition television, or other suitable device, and that allows a user to display audio-visual digital content on the television that is streamed or casted using a compatible streaming application or "app," such a Hulu™, Netflix™, Pandora™, YouTube™, Spotify™, etc., from the user's cell phone or personal computer. The user downloads the Chromecast app onto his/her cell phone, and during the set-up process of the app the user can identify, list and name any number of televisions that include a digital media device and that operate on the same network. The cell phone is also loaded with one or more of the streaming apps, where the user will open the desired streaming app, select the desired output device, such as a television, from the list, select particular content on the streaming app to be cast or streamed, and press a cast button on the app to stream the selected content to the selected output device. The streaming app is used to navigate through the content while the content is being displayed.

The Chromecast protocol discussed above operates as intended in a private environment with a limited number of output devices that can be selected. However, in a public environment, such as in a hotel, there may be many output devices operating on the same network as a Chromecast media player, such as in each separate hotel room. In the general Chromecast use case discussed above, the user could identify and select from any of those output devices using the streaming app, such as output devices in other people's rooms, resulting in obvious problems for other users in those rooms making that general use unacceptable. Thus, there needs to be a way in which only the output device in the user's room can be selected for streaming digital content.

### SUMMARY

The following discussion discloses and describes a system and method for selectively delivering audio and/or visual digital content from a mobile device, such as a cell phone, to a display device, such as a Chromecast enabled television in a hotel room. The method includes broadcasting advertisement signals from a plurality of the display devices over a first WiFi network indicating that the display devices are available to receive audio and/or visual digital content. A device controller receives the advertisement signals on the first network and generates a database identifying each display device that is available and its room location. Display commands are sent from the mobile device registered to a user in a certain hotel room to display audio and/or visual digital content on the display device in that room over a second WiFi network. The device controller receives the display commands on the second network and identifies the registered room number of the mobile device that sent the commands. The display commands are sent from the display controller to the display device on the first network based on the room location of the display device and the room location of the mobile device, and the audio and/or visual content is displayed on the display device.

Additional features of the disclosure will become apparent from the following description and appended claims, taken in conjunction with the accompanying drawings.

### BRIEF DESCRIPTION OF THE DRAWINGS

Figure 1 is a block diagram of a digital content delivery system for selectively controlling streaming of audio-visual digital content from a mobile device registered to a hotel room guest and a Chromecast enabled device in the hotel room;
Figure 2 is a flow chart diagram showing a process for identifying Chromecast devices provided in a number of hotel rooms and registered guests of those hotel rooms; and
Figure 3 is a flow chart diagram showing a process for allowing a registered guest at the hotel having a Chromecast enabled mobile device to only stream to the Chromecast device in his/her room.

### DETAILED DESCRIPTION OF THE EMBODIMENTS

The following discussion of the embodiments of the disclosure directed to a system and method for selectively casting, streaming or otherwise delivering audio-visual digital content from a mobile device to a Chromecast enabled device in a hotel or other public area is merely exemplary in nature, and is in no way intended to limit the invention or its applications or uses.

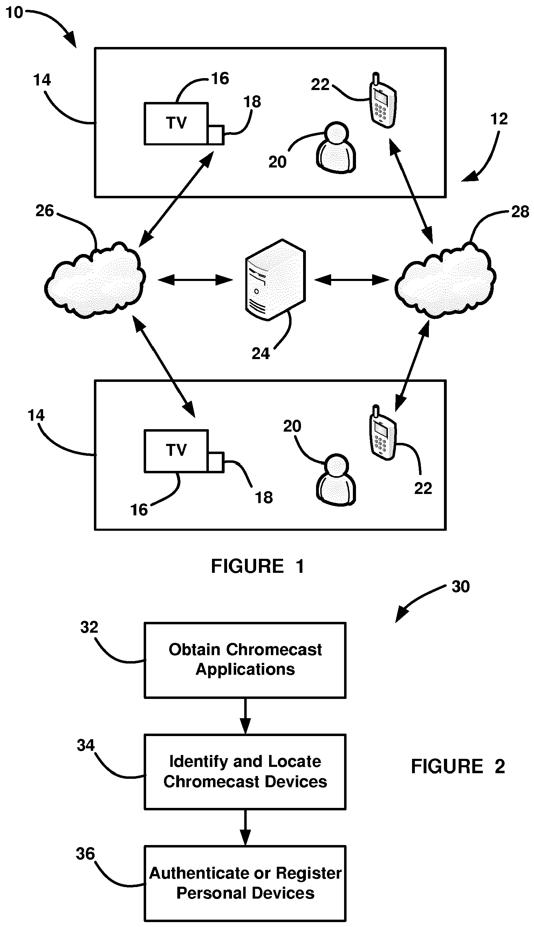

Figure 1 is a block diagram of a digital content delivery system 10 for selectively controlling the delivery of audio-visual digital content to certain display devices, such as televisions, in a public area, such as a hotel 12. Although it is the hotel 12 that is used herein to illustrate the embodiments of this disclosure, it is noted that the delivery of digital content as discussed within other public areas may be equally applicable. The hotel 12 includes a number of hotel rooms 14 each including a television 16, or other device, that is equipped with a Chromecast display device 18 that allows the television 16 to display audio-visual content that is cast or streamed from a properly equipped source. Although the discussion herein refers to the Chromecast device 18 as being the device that allows the audio-visual content to be displayed on the television 16, it is meant as merely an example of such a device, where other devices, such as an Android TV, may also be applicable.

A hotel guest 20 may be occupying a certain one of the hotel rooms 14 at any given point in time, and may bring with him/her a personal mobile device 22, such as a cell phone, smartphone, laptop, desktop computer, tablet computer, etc. The personal device 12 may be loaded with the necessary Chromecast app that allows it to recognize and communicate with the Chromecast device 18 on a common network and be loaded with one or more streaming apps, such as Netflix, YouTube, Spotify, etc., that allows the device 22 to stream audio and/or visual digital content to the device 18 in the manner discussed above. The system 10 also includes a controller 24 that is located in the network facility of the hotel 14, such as in a server closet. The controller 24 is in communication with the Chromecast devices 18 in every room 14 on a controller WiFi network 26 and is in communication with all of the registered personal devices 22 in the hotel 12 on a separate guest WiFi network 28. As will be discussed in detail below, the controller 24 operates various processes and algorithms that only allow each personal device 22 to stream digital content to the television 16 that is in the room 14 that is registered to the guest 20 associated with that device 22.

Each of the Chromecast devices 18 broadcasts signals or advertisements over the controller WiFi network 26 that indicate it is available to receive commands from a Chromecast app to display the audio-visual content on the television 16 it is connected to. Those signals are received by the controller 24, which generates a database or "map" in its memory that identifies which Chromecast devices 18 are available at what IP address and the specific room 14 in which each of the identified Chromecast devices 18 is located. The controller 24 also monitors each of the Chromecast devices 18 when in use over the controller network 26 to identify certain statistics for each of the devices 18, such as what app they are currently running, for example, Netflix, Hulu, etc., so that the controller 24 knows whether the Chromecast devices 18 are on line and active.

The personal devices 22 do not see the signals or advertisements broadcast from the Chromecast devices 18 indicating they are available to receive and display content because they are not connected to the controller network 26, but are connected to the guest network 28. The controller 24 operates a Chromecast application protocol while in communication with the personal devices 22 over the guest network 28 so that the personal devices 22 think they are in communication with the Chromecast devices 18 when they actually are not. When the guest 20 opens a streaming app on his/her personal device 22 that is properly configured with the Chromecast app to cast audio-visual digital content to a Chromecast device 18, the controller 24 identifies what room 14 that device 22 is registered to and only displays a selection for the Chromecast device 18 that is in the room 14 associated with that guest 20 so that the guest 20 cannot select any other of the Chromecast devices 18 in other rooms 14. In other words, when a guest 20 attempts to connect to a Chromecast device 18, the controller 24 receives the command signal from the guest's personal device 22 on the network 28, and then verifies from previously stored IP address information what room 14 that device 22 is associated with. Usually, when a guest 20 attempts to connect his/her device 22 to the guest WiFi network 28, they are required to enter their name and room number, so that the controller 24 will have that information. The controller 24 transfers the streaming signals it receives from the personal devices 22 on the guest network 28 to the selected Chromecast device 18 on the controller network 26. In other words, the controller 24 operates as only a gateway or tunnel between the Chromecast devices 18 and the personal devices 22 in that the controller 24 does not decipher, interpret or otherwise change the commands from the personal device 22 to the Chromecast device 18. In this manner, the controller 24 does not know what streaming apps the personal device 22 is streaming on the Chromecast device 18 or the content that is being streamed.

The discussion above concerning selectively displaying audio-visual digital content on a certain one of the Chromecast devices 18 is described in more detail in the following two flow chart diagrams. Figure 2 is a flow chart diagram 30 showing an algorithm operating in the controller 24 for identifying all of the operating Chromecast devices 18 that are available in the hotel 12 and their locations or room numbers and identifying all of the personal devices 22 that are registered on the network 28 and their location or registered room numbers. At box 32, the controller 24 obtains a list of all the currently available Chromecast compatible streaming applications from Google™, i.e., Netflix, Pandora, YouTube, etc., and generates a service profile, using, for example, a RESTful™ application programming interface (API), that includes all of the Chromecast applications, where the service profile mimics the service availability of each of the Chromecast devices 18. This process may include starting or restarting a third-party server daemon to announce the availability of the controller 24 and support for the streaming apps in the service profile on all of the network adapters.

At box 34, the controller 24 identifies each of the Chromecast devices 18 using, for example, a standard compliance service that supports casting connected to the controller network 26. The controller 24 reaches out to a master Google database over the Internet to obtain Chromecast mapping information that identifies which Chromecast device 18 is in which of the rooms 14, and stores in the memory of the controller 24 the mapping information for the Chromecast devices 18.

At box 36, the personal devices 22 are authenticated or registered, which may include employing an authentication engine to authenticate the personal devices 22 and creating an in-memory database in the controller 24 containing information about each of the devices 22. If available, user access gateway integration is employed that includes reaching out to a third-party user access gateway, or the same party user access gateway, to obtain a list of currently authenticated personal devices 22 that have been registered on the network 28. The information is parsed and sanitized, and then stored in an authentication engine database. The process may require that the guest 20 subscribe to a certain level of bandwidth or require that the guest 20 purchases the ability to utilize the in-room casting service. If user access gateway integration is not available or the third-party does not support the user access gateway, the controller 24 can use an API service for authenticating or registering the personal devices 22 by last name and room number. When the registration information is posted to the API service, the information is posted against the third-party property management system for validation if the information is available. The information is stored in the authentication engine database after being parsed and sanitized. An error message is returned if the registration process of a personal device 22 in the controller 24 fails.

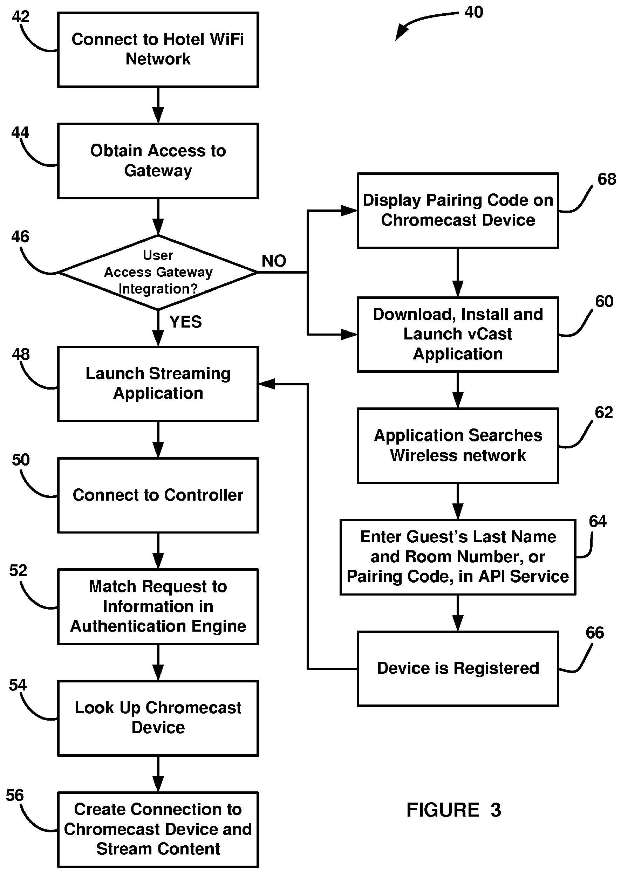

Figure 3 is a flow chart diagram 40 showing how the guest 20 connects his/her personal device 22 to the Chromecast device 18 in his/her room 14. At box 42, the guest 20 connects his/her device 22 to the guest WiFi network 28 using the hotel registration process, and at box 44 the guest 20 authenticates his/her personal device 22 with the third-party user access gateway or open access is granted by, for example, selecting the guest network 28 in the settings of the personal device 22. At decision diamond 46, the algorithm determines if the hotel 12 has user access gateway integration, and if so, the guest 20 opens a Chromecast enabled streaming application, such as Netflix, YouTube, Spotify, etc., on the guest device 22 and presses the "cast" button on the device 22 at box 48. The guest 20 is then prompted to connect to vCast on the personal device 22 or is auto-connected to vCast, which connects the personal device 22 to the controller 24 over the network 28 at box 50. When the personal device 22 attempts to connect to the controller 24 to stream the content, a device request is matched to the information in the authentication engine to determine what room number the guest 20 is registered to at box 52. If there is no registration information, the connection is immediately dropped or rejected. At box 54, the controller 24 looks up the corresponding Chromecast device 18 in that guest's room, and accepts the incoming connection from the device 22 to the Chromecast device 18. The controller 24 then creates a connection to the corresponding Chromecast device 18, and the guest 20 proceeds to interact with the streaming application and casts content to the Chromecast device 18 for that specific guest room at box 56.

If the hotel 12 does not have user access gateway integration at the decision diamond 46, the guest 20 can visit the app store on the device 22, and download, install and launch the vCast application at box 60. The application searches the wireless network 28 for the API service at box 62 discussed above, and once located, the vCast application displays a prompt for the guest's last name and room number at box 64. The guest 20 clicks or presses "register" on the personal device 22 at box 66 and the information discussed above is posted to the API. If the registration does not fail, a success message is displayed. Once the device 22 is registered the process then proceeds to the box 48 to launch the streaming application. Alternately, if the hotel 12 does not have user access gateway integration at the decision diamond 46, the controller 24 can manage and display a pairing code on the Chromecast device 18 at box 68, where the guest 20 will enter the pairing code at the box 64 instead of the last name and room number.

The foregoing discussion discloses and describes merely exemplary embodiments of the present disclosure. One skilled in the art will readily recognize from such discussion and from the accompanying drawings and claims that various changes, modifications and variations can be made therein without departing from the spirit and scope of the disclosure as defined in the following claims.

## Claims

1. A method for delivering audio and/or visual digital content from a mobile device to a display device, said method comprising:
broadcasting advertisement signals from a plurality of display devices over a first WiFi network indicating that the display devices are available to receive audio and/or visual digital content;
receiving the advertisement signals on the first network at a device controller, said device controller generating a database identifying each display device that is available and its location;
sending display commands from a mobile device to display audio and/or visual digital content on one of the plurality of display devices over a second WiFi network;
receiving the display commands on the second network at the device controller, said device controller identifying a location of the mobile device that sent the display commands; and
sending the display commands from the display controller to a selected one of the display devices on the first network based on the location of the selected one display device and the location of the mobile device and displaying the audio and/or visual content on the selected one of the display devices.

2. The method according to claim 1 further comprising obtaining a list of streaming applications by the display controller that stream audio and/or video digital content and generating a service profile of each streaming application that mimics the display devices.

3. The method according to claim 1 further comprising authenticating and registering the mobile device and its location as part of a database that includes registrations for a plurality of mobile devices.

4. The method according to claim 3 wherein the location of the mobile device is a room number in a hotel room.

5. The method according to claim 3 wherein registering the mobile device includes employing user access gateway integration.

6. The method according to claim 3 wherein registering the mobile device includes using an application programming interface.

7. The method according to claim 3 wherein registering the mobile device includes displaying a pairing code on the display device.

8. The method according to claim 1 wherein the plurality of display devices are Chromecast enabled devices.

9. The method according to claim 1 wherein the plurality of display devices are Android devices.

10. The method according to claim 1 wherein the mobile device is a cell phone, laptop computer, desktop computer, tablet computer or any other computing device that supports the necessary communications protocol.

11. A method for selectively delivering audio and/or visual digital content in a hotel, said method comprising:
providing a Chromecast enabled device in each of a plurality of rooms in the hotel;
broadcasting advertisement signals from the Chromecast enabled devices over a first WiFi network indicating that the Chromecast enabled devices are available to receive and display audio and/or visual digital content;
registering mobile devices brought by guests staying in the hotel rooms in a registration database using a second WiFi network, where each mobile device includes a Chromecast application capable of operating the Chromecast enabled device in the hotel room and at least one streaming application that is capable of streaming audio and/or digital content to the Chromecast enabled device;
providing a controller that controls the delivery of the audio and/or digital content from the mobile devices to the Chromecast enabled devices;
receiving the advertisement signals by the controller on the first network, said controller generating a display device database identifying each of the Chromecast enabled devices that is available and its room location;
sending display commands from a particular one of the mobile devices to display audio and/or visual digital content on one of the Chromecast enabled devices over the second network;
receiving the display commands on the second network at the controller, said controller identifying the room location of the mobile device from the registration database that sent the display commands; and
sending the display commands from the controller over the first network to a selected one of the Chromecast enabled devices based on the location of the selected one of the Chromecast enabled devices and the room location of the mobile device and displaying the audio and/or visual content on the selected one of the Chromecast enabled devices.

12. The method according to claim 11 further comprising obtaining a list of streaming applications that are available to stream digital content and generating a service profile of each streaming application that mimics the Chromecast enabled devices.

13. The method according to claim 11 wherein registering the mobile devices includes employing user access gateway integration.

14. The method according to claim 11 wherein registering the mobile devices includes using an application programming interface.

15. The method according to claim 11 wherein registering the mobile devices includes displaying a pairing code on the Chromecast enabled device.

16. The method according to claim 11 wherein registering the mobile devices requires obtaining a certain level of casting bandwidth.

17. The method according to claim 11 wherein the mobile devices are cell phones, laptop computers, desktop computers, tablet computers or any other computing device that supports the necessary communications protocol.

18. A system for delivering audio and/or visual digital content from a mobile device to a display device, said system comprising:
means for broadcasting advertisement signals from a plurality of display devices over a first WiFi network indicating that the display devices are available to receive audio and/or visual digital content;
means for receiving the advertisement signals on the first network at a device controller, said device controller generating a database identifying each display device that is available and its location;
means for registering mobile devices brought by guests staying in the hotel rooms in a registration database using a second WiFi network;
means for sending display commands from the mobile devices to display audio and/or visual digital content on the plurality of display devices over the second WiFi network;
means for receiving the display commands on the second network at the device controller, said device controller identifying a location of the mobile devices that sent the display commands; and
means for sending the display commands from the display controller to a selected one of the display devices on the first network based on the location of the selected one display device and the location of the mobile device and means for displaying the audio and/or visual content on the selected one of the display devices.

19. The system according to claim 18 wherein the means for registering the mobile device includes means for employing user access gateway integration, means for registering the mobile device using an application programming interface, or means for displaying a pairing code on the display device.

20. The system according to claim 18 wherein the display devices are Chromecast enable devices or Android devices.
